# EUROPEAN PATENT SPECIFICATION

(11) **EP 3 711 353 B1**
(45) Date of publication and mention of the grant of the patent: **28.09.2022**
(21) Application number: 17805174.4
(22) Date of filing: 24.11.2017
(51) Int. Cl.: H04W 36/00, H04W 24/10, H04W 36/24, H04W 36/32, H04W 64/00, H04W 88/08

(54) **NETWORK ACCESS NODES AND METHOD THEREOF**
NETZZUGANGSKNOTEN UND VERFAHREN DAFÜR
NOEUDS D'ACCÈS AU RÉSEAU ET MÉTHODE CORRESPONDANTE

(43) Date of publication of application: 23.09.2020
(73) Proprietor: Huawei Technologies Co., Ltd., Longgang District Shenzhen, Guangdong 518129 (CN)
(72) Inventor: QVARFORDT, Johan, Christer, 16440 Kista (SE); KOUDOURIDIS, George, 16440 Kista (SE)
(74) Representative: Pfenning, Meinig & Partner mbB
(86) International application number: PCT/EP2017/080374
(87) International publication number: WO 2019/101334

(56) References cited:
- US-A1- 2012 009 938
- US-A1- 2013 005 381
- US-A1- 2013 242 941
- US-A1- 2017 223 552
- ERICSSON: "Summary of [NR-AH2#11][NR] Baseline", 3GPP DRAFT; R2-1709845 - NR-AH2-11-NR EMAIL-DISCUSSION 11_BASELINE HANDOVER PROCEDURE_FINAL_V3, 3RD GENERATION PARTNERSHIP PROJECT (3GPP), MOBILE COMPETENCE CENTRE ; 650, ROUTE DES LUCIOLES ; F-06921 , vol. RAN WG2, no. Berlin, Germany; 20170821 - 20170825 27 August 2017 (2017-08-27), XP051330394, Retrieved from the Internet: URL:http://www.3gpp.org/ftp/tsg_ran/WG2_RL 2/TSGR2_99/Docs/ [retrieved on 2017-08-27]

## Description

### Technical Field

The invention relates to a first network access node. Furthermore, the invention also relates to a wireless communication system comprising the first network access node and further comprising a second network access node.

### Background

One of the most important functionalities in wireless communication is to maintain the connection between the user equipment (UE) and the wireless network. Since the radio signal deteriorates as a function of the distance between the UE and the network transmission point, there is a need to move the connection between two network transmission and reception points (TRP) as the UE moves in network to create continuous coverage of the wireless network. This is often referred to as handover or handoff.

Two of the objectives with the specification of long term evolution (LTE) with the 3GPP standardization work were management simplicity and operational cost efficiency. These objectives have been defined in terms of requirements on Self-Organizing Networks (SON) as specified in a number of use cases. 3GPP specifies the operation of a number of SON use cases, where the notion of collecting radio measurements from the UE associated with the position of the UE was introduced under the name of Minimization of Drive Test (MDT). This would enable the wireless network to obtain a large set of measurements related to a specific position or area. The position based radio measurements have been suggested to be used for defining position based handover.

With the introduction of the 5^{th} generation network in the 3GPP standardization, named New Radio (NR), new spectrum has been introduced aiming for higher carrier frequencies, up to 100 GHz, often referred to as millimetre wave (mmW). The characteristics of the higher frequencies is that the distance attenuation of the signal is higher and the diffraction of the signal, i.e. the ability for the signal to spread around a corner, is smaller. To compensate for the smaller coverage of a TRP a multi-antenna configuration creating a directional amplification of the signal in a specific direction can be used. For very high frequencies directional antennas at both the TRP and the UE are expected. Due to the smaller diffraction and the beams for coverage there is an increased probability that an obstacle in between the line of sight (LOS) of the UE and the TRP is blocked. Since the smaller coverage will increase the required density of TRPs in an area to provide continuous coverage of the mmW wireless network, it is highly probable that the TRPs will be placed at a lower height compared to traditional network deployments, such as on lamp posts or on building walls. This will also increase the risk for temporary blocking of the beam aligned connection. Hence, to maintain the connection in these situations the beam blocking will require special handling, which has not been addressed in conventional solutions.

United States patent application US 2013/242941 A1 presents a system and method for reducing handover occurrences in a wireless communication network. A first base station wirelessly communicates with a terminal. A second base station predicts a handover interval based on handover history information upon receiving from the first base station a handover request for performing a handover of the terminal to the second base station, where the handover interval indicates a time period from a first handover time at which a first handover of the terminal is performed from the first base station to the second base station, to a second handover time at which a second handover of the terminal is performed from the second base station to another base station, and the handover history information indicates a history of handovers that have been performed by the second base station. Then, the second base station determines whether a handover of the terminal to the second base station is permitted or not, based on the predicated handover interval.

United States patent application US 2012/009938 A1 presents a cellular location system and method. A cellular location method uses a cellular location system including a database. The cellular location method obtains radio measurements from a user terminal located in the communications network, extracts information from the obtained radio measurements, determines the location of the user terminal based on the extracted information, and stores the determined location of the user terminal and the extracted information as an entry in the database. Additionally, the cellular location method estimates information for the user terminal for another location in the communications network. The estimated information for the user terminal may be based upon the extracted information for the user terminal or upon obtained information from a co-sited communications network. A location of the specified user terminal can be obtained based on a matching score between measurements from the specified user terminal and the sored user terminal measurements including the extracted information and the estimated information.

### Summary

An objective of embodiments of the invention is to provide a solution which mitigates or solves the drawbacks and problems of conventional solutions.

The above and further objectives are solved by the subject matter of the independent claims. Further advantageous embodiments of the present invention can be found in the dependent claims.

According to a first aspect of the invention, the above mentioned and other objectives are achieved with a first network access node for a wireless communication system, the first network access node comprises:at least one processing unit, configured to:obtain a first measured radio signal information for a client device;obtain a first spatial location for the client device;derive, when the radio link quality between the first network node and client device suddenly drops or is completely blocked, a first expected radio signal information for the client device using a database and the first spatial location for the client device, wherein the database stores radio signal measurements related to a spatial location over time, as distributions of the radio signal;determine a first radio signal deviation, D1, by comparing the first measured radio signal information with the first expected radio signal information at the first spatial location of the client device;generate a first control message comprising the first spatial location for the client device and the first radio signal deviation, D1 ;at least one transceiving unit, configured to:transmit the first control message to a second network access node.

An advantage with the first network access node according to the first aspect is that first network access node can detect and indicate to the second network access node about an unexpected radio link quality drop of a serving link between the first network access node and the client device. This enable the second network access node to handle the client device with a specific procedure that can assist the first network access node, e.g., by reserving in advance network resources to serve the client device. The value of the first radio signal deviation can further be used to determine the behaviour of the second network access node, for example it can determine the required time for the procedure to be invoked, which will be different when the serving link between the first network access node and the client device is completely blocked or just degraded. Finally, it increases the knowledge in the second network access node about the existence of obstacles and scatterers for a spatial location.

A further advantage with this implementation form is that the radio signal measurements related to a spatial location can be collected in the database over time and stored as distributions of the radio signal information from which the first expected radio signal information can be derived by a comparison of the first measured radio signal information with the first expected radio signal information the first radio signal deviation can be determined.

In an implementation form of a first network access node according to the first aspect, the first network access node is configured to generate the first control message if the first radio signal deviation is larger than a deviation threshold value.

An advantage with this implementation form is that it enables the first network access node to select in which situation that it would indicate to the second network access node about the unexpected radio link quality drop of the serving link. This can be useful in multiple ways. The threshold value can be used to capture larger values of the first radio signal deviation that would indicate total blocking of the serving link. It can also be beneficially used when smaller values of the first radio signal deviation are detected which would not require any special handling by the second network access node. In this case this implementation allows for the second network access node to determine radio link quality deterioration and determine appropriate network resource reservations.

In an implementation form of a first network access node according to the first aspect, the first network access node is configured to select, prior to transmitting the first control message, the second network access node based on at least one of the first spatial location and the first expected radio signal information. An advantage with this implementation form is that the first network access node can use the stored radio signal information and compare the expected radio signal information for different neighbouring network access node for the first spatial location and select the second network access node as the one having the highest expected radio signal information. The selection does not have to be based on recent measured radio signal information, which would allow the first network access node to perform the selection even in the case where the measurement report from the client device is not delivered due to the blocking. The advantage of this implementation is that it provides a robust client device service.

In an implementation form of a first network access node according to the first aspect, the first network access node is configured to
determine a first validity time period associated with the first radio signal deviation;
generate the first control message further comprising the first validity time period.

An advantage with this implementation form is that it allows the first network access node to indicate the urgency and the time interval within which the request in first control message should be addressed. If the request is related to a handover from the first network access node to a second network access node then the first validity time corresponds to the time that required resource allocations from the second network access node should be reserved and the handover should be completed. This would typically correspond to the time the client device identifies radio link failure and triggers cell reselection procedure. If the request is related to the addition of a second network access node to the group of nodes serving the client device, then the first validity time corresponds to the time period within which the second network access node should be added in the group.

In an implementation form of a first network access node according to the first aspect, the first network access node is configured to
receive a second control message from the second network access node, wherein the second control message comprises a handover request response and a second radio signal deviation, wherein the second radio signal deviation defines a deviation between a second measured radio signal information for the client device and a second expected radio signal information for the client device;
determine an additional handover request based on the first radio signal deviation and the second control message, wherein the additional handover request indicates a handover from the first network access node to a third network access node;
generate an additional first control message comprising the additional handover request;
transmit the additional first control message to the third network access node.

An advantage with this implementation form is to enable the first network access node to understand that a possible link between the client device and the selected second network access node also was blocked and that another neighbouring network access node should be prepared for handover. In case of mobility handling based on uplink signals, the first network access node would not be able to determine the quality of the link between the client device and the second network access node by any measurement reports from the client device, so this implementation form would then be useful. The implementation form also allows network access nodes to exchange information about the radio link conditions of the client device and determine in a distributed manner and by means of comparison which network access node may best take over the serving responsibility of the client device.

In an implementation form of a first network access node according to the first aspect, the first network access node is configured to
determine, when serving the client device, a node addition request based on the first radio signal deviation, wherein the node addition request indicates an addition of the second network access node to a group of network access nodes configured to serve the client device;
generate the first control message further comprising the node addition request.

An advantage with this implementation form is to request the second network access node to be prepared for being added to the set of network access nodes serving the client device when a blocking of the serving link has occurred. It also provides an indication that the client device is to a certain degree blocked from the first network access node.

In an implementation form of a first network access node according to the first aspect, the first network access node is configured to
receive a second control message from the second network access node, wherein the second control message comprises a node addition request response and a second radio signal deviation, wherein the second radio signal deviation defines a deviation between a second measured radio signal information for the client device and a second expected radio signal information for the client device;
determine an additional node addition request based on the first radio signal deviation and the second control message, wherein the additional node addition request indicates an addition of a third network access node to a group of network access nodes configured to serve the client device;
generate an additional first control message comprising the additional node addition request;
transmit the additional first control message to the third network access node.

An advantage with this implementation form is to enable the first network access node to understand that a possible link between the client device and the second network access node also was blocked and that another neighbouring network access node should also be prepared for addition to the set of network access nodes serving the client device. In case of mobility handling based on uplink signals, the first network access node would not be able to determine the quality of the link between the client device and the second network access node by any measurement reports from the client device, so this implementation form would then be useful. It also allows network access nodes to exchange information about the radio link conditions of the client device and determine in a distributed manner and by means of comparison the group of network access nodes that the client device can be connected to.

In an implementation form of a first network access node according to the first aspect, the second control message further comprises a second validity time period associated with the second radio signal deviation.

An advantage with this implementation form is that it allows the second network access node to include the second radio signal deviation along with the available network resources in its decision to determine and indicate the time period that the second network resources are reserved for the client device. For example, it makes feasible that the second network access node reserves network resources even when the second radio signal deviation indicates blocking of the client device in anticipation for the removal of the blocking within the time period given by the validity time period. The validity time period in the second control message can be based on the validity time period in the first control message and the maximum time period that network resources may be reserved by the second network access node. This useful in a solution where the second network access node can assist the first network access node, within a reasonable time planning of network resource reservations, although the radio link between the second network access node and the client device is temporarily blocked.

In an implementation form of a first network access node according to the first aspect, the first network access node is configured to
transmit, prior to obtain the first measured radio signal information, a measurement report request to the client device;
receive a measurement report from the client device in response to the transmission of the measurement report request;
obtain the first measured radio signal information based on the measurement report.

An advantage with this implementation form is that the first network access node can become aware of the drop of quality of the link between the first network access node and the client device based on the absence of a measurement report, meaning that the first network access node can initiate the process described in this invention also based on not receiving an expected measurement report. In case of absence of measurement report the obtained first measured radio signal information can be set to a value indicating no signal to characterise a blocking of the client device.

According to a second aspect of the invention, the above mentioned and other objectives are achieved with a wireless communication system comprising the first network access node and further comprising a second network access node, the second network access node comprises:a transceiving unit, configured to receive a first control message from the first network access node, wherein the first control message comprises a first spatial location for a client device and a first radio signal deviation, D1, wherein the first radio signal deviation, D1, defines a deviation between a first measured radio signal information for the client device and a first expected radio signal information for the client device;a processing unit, configured to reserve network resources based on the first control message.

An advantage with the wireless communication system comprising the first network access node and further comprising the second network access node according to the second aspect is that the second network access node can become aware of the link blocking between the first network access node and the client device and then handle the blocking situation using a procedure that can be different from a traditional handling, by reserving network resources and keeping the reservation of network resources for a longer period of time to assist the first network access node in recovering the connection for the client device. Another advantage of this implementation is that the second network access node can become aware of link blocking between itself and the client device and potentially reserve network resources in anticipation of ceased blocking.

In an implementation form a wireless communication system comprising the first network access node and further comprising a second network access node according to the second aspect, the first control message further comprises a handover request indicating a handover from the first network access node to the second network access node; and further configured to
obtain a second measured radio signal information for the client device;
obtain a second spatial location for the client device based on the first spatial location for the client device;
derive a second expected radio signal information for the client device based on the second spatial location for the client device;
determine a second radio signal deviation between the second measured radio signal information and the second expected radio signal information;
determine a handover request response based on the first radio signal deviation, the second radio signal deviation and the reserved network resources;
generate a second control message comprising the handover request response and the second radio signal deviation;
transmit the second control message to the first network access node.

An advantage with this implementation form is that the second network access node can determine the second radio signal deviation and how it responds to the handover request from the first network access node in order to prevent radio link failure. The inclusion of the second radio signal deviation indicates the degree of blocking between the client device and the second network access node. A positive response from the second network access node to the first network access node signals that the second network access node can reserve network resources for the client device independent of the determined second radio signal deviation and in a proactive handover manner. In the case of high second radio signal deviation it allows for example the first network access node to select additional candidates to handover the client device. A negative response from the second network access node to the first network access node signals that the second network access node cannot reserve network resources for the client device given the determined second radio signal deviation. This allows for example the first network access node to select another candidate to handover the client device.

In an implementation form of a a wireless communication system comprising the first network access node and further comprising a second network access node according to the second aspect, the first control message further comprises a node addition request indicating addition of the second network access node to a group of network access nodes configured to serve the client device; and further configured to
obtain a second measured radio signal information for the client device;
obtain a second spatial location for the client device based on the first spatial location for the client device;
derive a second expected radio signal information for the client device based on the second spatial location for the client device;
determine a second radio signal deviation between the second measured radio signal information and the second expected radio signal information;
determine a node addition request response based on the first radio signal deviation, the second radio signal deviation and the reserved network resources;
generate a second control message comprising the node addition request response and the second radio signal deviation;
transmit the second control message to the first network access node.

An advantage with this implementation form is that the second network access node can determine the second radio signal deviation and how it responds to the node addition request from the first network access node in order to prevent radio link failure and service interruption. The inclusion of the second radio signal deviation indicates the degree of blocking between the client device and the second network access node. A positive response from the second network access node to the first network access node signals that the second network access node can reserve resources for the client device independent of the determined second radio signal deviation and in a proactive manner. In the case of high second radio signal deviation it allows for example the first network access node to select additional candidates to add to the group of network access nodes serving the client device. A negative response from the second network access node to the first network access node signals that the second network access node cannot reserve network resources for the client device given the determined second radio signal deviation. This allows for example the first network access node to select another candidate to add to the group of network access nodes serving the client device.

In an implementation form of a a wireless communication system comprising the first network access node and further comprising a second network access node according to the second aspect, the second network access node is configured to
determine a second validity time period associated with the second radio signal deviation;
generate the second control message further comprising the second validity time period.

An advantage with this implementation form is that it allows the second network access node to include the time period that the network resources are reserved for the client device. For example, it makes feasible that the second network access node reserves network resources even when the second radio signal deviation indicates blocking of the client device in anticipation for the cease of the blocking within the time period given by the second validity time period. The second validity time in the second control message can be based on the first validity time period in the first control message and the maximum time that network resources may be reserved by the second network access node. This is useful in a solution where the second network access node can assist the first network access node, within a reasonable time planning of network resource reservations, although the radio link between the second network access node and the client device is temporarily blocked.

According to a third aspect not part of the present invention, the above mentioned and other objectives are achieved with a method for a first network access node, the method comprising
obtaining a first measured radio signal information for a client device;
obtaining a first spatial location for the client device;
deriving a first expected radio signal information for the client device based on the spatial location for the client device;
determining a first radio signal deviation between the first measured radio signal information and the first expected radio signal information;
generating a first control message comprising the first spatial location for the client device and the first radio signal deviation;
transmitting the first control message to a second network access node.

The method according to the third aspect can be extended into implementation forms corresponding to the implementation forms of the first network access node according to the first aspect. Hence, an implementation form of the method comprises the feature(s) of the corresponding implementation form of the first network access node.

The advantages of the methods according to the third aspect are the same as those for the corresponding implementation forms of the first network access node according to the first aspect.

According to a fourth aspect not part of the present invention, the above mentioned and other objectives are achieved with a method for a second network access node, the method comprising
receiving a first control message from a first network access node, wherein the first control message comprises a first spatial location for a client device and a first radio signal deviation, wherein the first radio signal deviation defines a deviation between a first measured radio signal information for the client device and a first expected radio signal information for the client device;
reserving network resources based on the first control message.

The method according to the fourth aspect can be extended into implementation forms corresponding to the implementation forms of the second network access node according to the second aspect. Hence, an implementation form of the method comprises the feature(s) of the corresponding implementation form of the second network access node.

The advantages of the methods according to the fourth aspect are the same as those for the corresponding implementation forms of the second network access node according to the second aspect.

Further applications and advantages of the present invention will be apparent from the following detailed description.

### Brief Description of the Drawings

The appended drawings are intended to clarify and explain different embodiments of the present invention, in which:
- Fig. 1 shows a first network access node and a second network access node according to an embodiment of the invention;
- Fig. 2 shows a first method according to an embodiment of the invention;
- Fig. 3 shows a second method according to an embodiment of the invention;
- Fig. 4 shows a wireless communication system according to an embodiment of the invention;
- Fig. 5 shows a signalling diagram according to an embodiment of the invention;
- Fig. 6 shows a signalling diagram according to an embodiment of the invention;
- Fig. 7 illustrates different blocking scenarios.

### Detailed Description

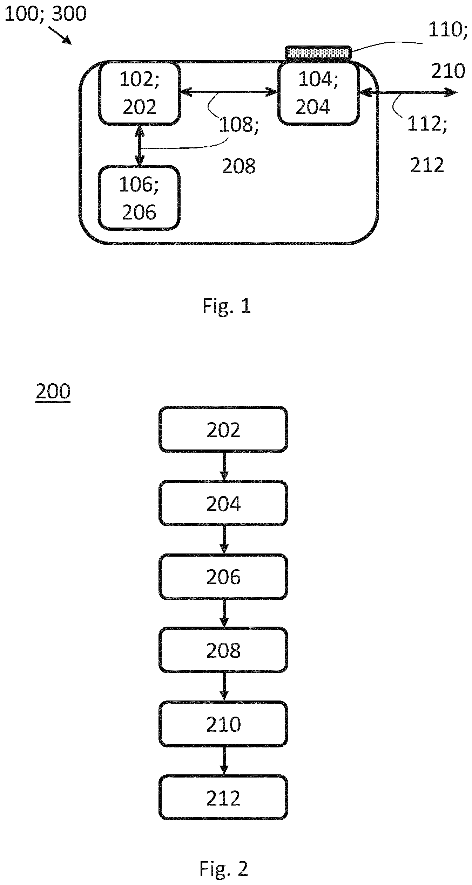

Fig. 1 shows a network access node which can be a first network access node 100 or a second network access node 300 according to embodiments of the invention. In the embodiments shown in Fig. 1, the first network access node 100 and the second network access node 300 comprises a processor 102; 202, a transceiver 104; 204 and a memory 106; 206. The processor 102; 202 is coupled to the transceiver 104; 204 and the memory 106; 206 by communication means 108; 208 known in the art. The first network access node 100 and the second network access node 300 may be configured for both wireless and wired communications in wireless and wired communication systems, respectively. The wireless communication capability is provided with an antenna or an antenna array 110; 210 coupled to the transceiver 104; 204, while the wired communication capability is provided with a wired communication interface 112; 212 coupled to the transceiver 104; 204. That the first network access node 100 and the second network access node 300 is configured to perform certain actions functions should in this disclosure be understood to mean that the first network node 100 and the second network access node 300 comprises suitable means, such as e.g. the processor 102; 202 and the transceiver 104; 204, configured to perform said actions or functions.

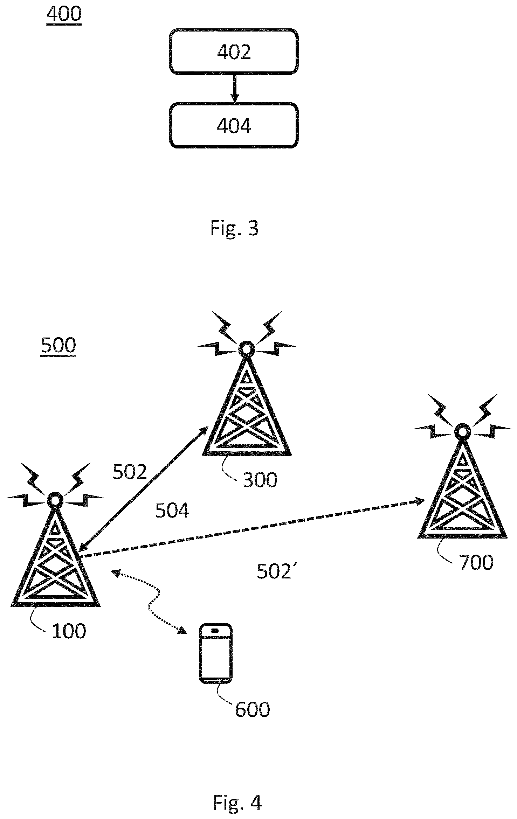

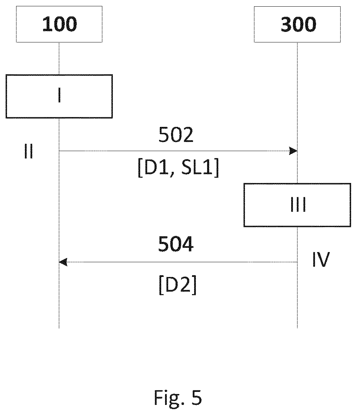

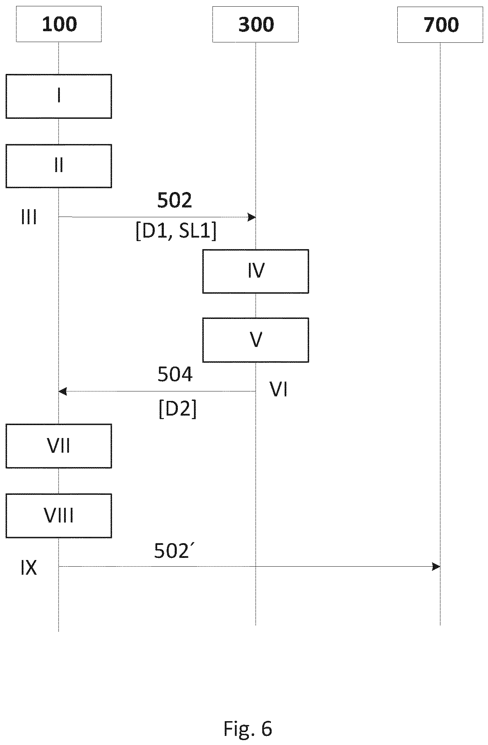

The first network access node 100 herein is configured to obtain a first measured radio signal information for a client device 600 (shown in Fig. 4). The first network access node 100 is further configured to obtain a first spatial location SL1 (illustrated in Fig. 5 and 6) for the client device 600. The first network access node 100 is further configured to derive a first expected radio signal information for the client device 600 based on the spatial location for the client device 600. The first network access node 100 is further configured to determine a first radio signal deviation D1 (illustrated in Fig. 5 and 6) between the first measured radio signal information and the first expected radio signal information. The first network access node 100 is further configured to generate a first control message 502 (shown in Fig. 4) comprising the first spatial location SL1 for the client device 600 and the first radio signal deviation D1. The first network access node 100 is further configured to transmit the first control message 502 to a second network access node 300.

The first radio signal deviation D1 can in one embodiment be represented as a ratio between the first measured radio signal information and the first expected radio signal information and in an embodiment be represented as a difference between the first measured radio signal information and the first expected radio signal information. In a yet another embodiment the first radio signal deviation D1 can be an index or an identifier of a predefined region of deviation values, for example when the value of the first radio signal deviation D1 is larger than the lower bound of the region but smaller than the upper bound of the region, the reported first radio signal deviation D1 is an index or identifier of the specified region. Further representations of the first radio signal deviation D1 are possible.

The reported first radio signal deviation D1 in the first control message type 502 can further be including information about uncertainties of the deviation value, such as standard deviation, variance, percentiles or by other means describing the level of certainty of the reported first radio signal deviation D1. In an embodiment the first radio signal deviation D1 can be represented as a flag in the first message 502, simply indicating to the second network access node 300 that e.g. a temporary blocking has occurred. The flag can be represented as a single bit (normal/blocked) or with multiple bits to have more options (e.g. normal/blocked/obstructed).

The spatial location information exchanged between the network access nodes in the first control message type 502 can be represented by Cartesian coordinates, such as in <x,y,z> format, which could reflect an absolute geographical position (such as longitude and latitude) or a relative position (such as distance from the network access node's antenna point in origo, angle of arrival, etc.). The spatial location information could further be represented as a cell portion index, where the spatial location could be represented as an integer value displaying in which region of the coverage area of the network access node that the client device is located. As an example, in case of deployments where the network access node is using beamforming antennas, the cell portion could be the index of the serving beam in the transmitting network access node. If relative spatial location information or cell portion is shared between network access nodes there is a need for the other network access node to understand the reference points of the neighbouring network access nodes to be able to align the databases from different network access nodes. In case of uplink based mobility the problem of mutual understanding of the reference points is less prominent, since both the first network access node 100 and the second network access node 300 will be able to receive the reference signal from the same client device at the same time. The spatial location of the client device 600 can be determined independently in each network access node, and therefore can the exchange of the spatial location information from the transmitting network access node be easily related to the spatial location estimation in the receiving network access node. In case of downlink based mobility, the second network access node 300 could determine the reference point by comparing the reported spatial location from the first network access node 100 with the spatial location determined by the second network access node 300 after handover.

In an embodiment the first network access node 100 is configured to generate the first control message 502 if the first radio signal deviation D1 is larger than a deviation threshold value associated with the first radio signal deviation D1. When a radio signal measurement is performed many aspects of the surrounding environment is varying and when relating the radio signal measurements to a specific spatial location there will be natural variations. To avoid triggering the inclusion of the first radio signal deviation D1 in every signalling the first network access node 100 can compare the obtained first radio signal measurement with the first expected radio signal information and only when the first radio signal deviation D1 is considered as significant or necessary for the handling of the client device 600 the mechanism for including the first radio signal deviation D1 in the signalling with another network access node is invoked. The deviation threshold value can be set in relation to the estimated standard deviation of the radio signal measurements for a spatial location. In another example the deviation threshold value can correspond to an absolute value of the radio signal.

In an embodiment the first network access node 100 is configured to derive the first expected radio signal information using a database (not shown in the Figs.) and the first spatial location SL1 for the client device 600. The database can in one example be a radio service map in which spatial locations are mapped to one or more radio signal information and/or one or more expected radio signal information for client devices. Therefore, by using the spatial location for the client device 600 the first expected radio signal information can be derived from the radio service map.

In a network topology a plurality of network access nodes are located in a cellular system so in one aspect of the invention the first network access node 100 has to handle how to select the second network access node 300 among a plurality of neighbouring network access nodes in the network topology. Therefore, in an embodiment the first network access node 100 is configured to select, prior to transmitting the first control message 502, the second network access node 300 based on at least one of the first spatial location SL1 and the first expected radio signal information. The first network access node 100 can use the stored radio signal information and compare the expected radio signal information for different neighbouring network access node for the first spatial location SL1 and select the second network access node 300 as the one having the highest expected radio signal information. The expected radio signal information is retrieved from a database.

Moreover, the temporal aspect has to be considered by the network. In this respect the first network access node 100 is configured to determine a first validity time period associated with the first radio signal deviation D1. The first validity time period is sent in the first control message 502 to the second network access node 300. The first validity time period corresponds to the time period that the first network node 100 expects that the client device 600 issues a radio link failure message and initiates cell selection related procedures. In an embodiment the first validity time period may correspond to the user context expiration time which is triggered when the connection to the client device 600 is considered lost. The first validity time period indicates an estimation of the time period within which the network resources of the second network access node 300 should be reserved for the client device 600, for example, before a radio link failure occurs.

The second network access node 300 herein is configured to receive a first control message 502 from a first network access node 100. The first control message 502 comprises the first spatial location SL1 for a client device 600 and the first radio signal deviation D1 as previously described. The first radio signal deviation D1 hence defines a deviation between a first measured radio signal information for the client device 600 and a first expected radio signal information for the first spatial location SL1 for the client device 600. The second network access node 300 is further configured to reserve network resources based on the first control message 502. Examples of network resources are identifiers of the client device used for random access, e.g., RA-RNTI, to obtain contention-free access, transport network resources, scheduling resources comprising frequency, time, power and space, network modules (such as central units, distributed units, baseband units, radio frequency (RF) units, radio heads, antenna elements, other equipment employed in the client device service), etc. The reserved network resources can e.g. be used in handover procedures and/or in second network node addition procedures which will be described more in detail in the following disclosure.

Fig. 2 shows a flow chart of a first method 200 which may be executed in a first network access node 100, such as the one shown in Fig. 1. The method 200 comprises obtaining 202 a first measured radio signal information for a client device 600. The method 200 comprises obtaining 204 a first spatial location SL1 for the client device 600. The method 200 comprises deriving 206 a first expected radio signal information for the client device 600 based on the spatial location for the client device 600. The method 200 comprises determining 208 a first radio signal deviation D1 between the first measured radio signal information and the first expected radio signal information. The method 200 comprises generating 210 a first control message 502 comprising the first spatial location SL1 for the client device 600 and the first radio signal deviation D1. The method 200 comprises transmitting 212 the first control message 502 to a second network access node 300.

Fig. 3 shows a flow chart of a second method 400 which may be executed in a second network access node 300, such as the one shown in Fig. 1. The method 400 comprises receiving 402 a first control message 502 from a first network access node 100. The first control message 502 comprises a first spatial location SL1 for a client device 600 and a first radio signal deviation D1. The first radio signal deviation D1 defines a deviation between a first measured radio signal information for the client device 600 and a first expected radio signal information for the first spatial location SL1 for the client device 600. The method 400 comprises reserving 404 network resources based on the first control message 502.

Fig. 4 shows a wireless communication system according to an embodiment of the invention. The wireless communication system 500 comprises a first network access node 100 and a second network access node 300 configured to operate in the wireless communication system 500 and connected to each other with a bidirectional communication interface illustrated with the arrow. The wireless communication system 500 shown in Fig. 4 further comprises a client device 600 which at least initially is wirelessly connected to the first network access node 100. Further, a third network access node 700 is also shown in Fig. 4. The third network access node 700 is used for illustrating further embodiments of the invention.

Fig. 5 shows a general signalling diagram for the interworking between the first network access node 100 and the second network access node 300.

In step I in Fig. 5 the first network access node 100 generates a first control message 502 comprising a first radio signal deviation D1 and a first spatial location SL1 for a client device 600.

In step II in Fig. 5 the first network access node 100 transmits the first control message 502 to the second network access node 300 using suitable signalling. In this respect new or conventional signalling protocols may be used.

In step III in Fig. 5 the second network access node 300 reserves network resources based on the content of the first control message 502. Such network resources may e.g. be used in handover procedures and/or in node addition procedures. If response signalling is needed the second network access node 300 generates a second control message 504 comprising at least a second signal deviation D2.

In step IV in Fig. 5 the second network access node 300 transmits the second control message 504 to the first network access node 100.

In the following description embodiments related to handover and node addition will be described. In this respect the first network access node 100 can be seen as the source network access node whilst the second network access node 300 can be seen as the target network access node. Fig. 6 shows a detailed signalling diagram for the interworking between the first network access node 100 and the second network access node 300 in this respect. Also signalling to a third network access node 700 is illustrated in Fig. 6.

In step I in Fig. 6, it is assumed that the client device 600 is served by the first network access node 100. A trigger related to the deviation threshold value prepares the first network access node 100 for generating first control message 502.

In step II in Fig. 6, the first network access node 100 therefore generates the first control message 502 comprising at least a first radio signal deviation D1 and a first spatial location SL1 for the client device 600. Furthermore, the first control message 502 comprises in this embodiment at least one of a handover request and a node addition request (not shown in Fig. 6). The handover request indicates a handover from the first network access node 100 to the second network access node 300, whilst the node addition request indicates an addition of the second network access node 300 to a group of network access nodes configured to serve the client device 600. Due to the temporal aspect of unexpected blocking a dual connectivity solution could also be of interest, where the second network access node 300 is instead added to the client device 600 when possible. In this case the handover preparation procedure would be replaced with a secondary node addition procedure.

In step III in Fig. 6, the first network access node 100 transmits the first control message 502 to the second network access node 300 using suitable signalling. The second network access node 300 has been selected based on at least one of the first spatial location SL1 and the first expected radio signal information.

In step IV in Fig. 6, upon reception of the first control message 502, the second network access node 300 reserves network resources based on the first control message 502. The second network access node 300 may thereafter perform a number of different actions based on the reserved network resources and the content of the first control message 502. However, two major embodiments will herein be described related to handover and node addition but the invention is not limited thereto.

In step V in Fig. 6, if the first control message 502 comprises mentioned handover request the second network access node 300 performs the following:
- Obtain a second measured radio signal information for the client device 600.
- Obtain a second spatial location for the client device 600 based on the first spatial location SL1 for the client device 600.
- Derive a second expected radio signal information for the client device 600 based on the second spatial location for the client device 600. The second expected radio signal information can e.g. be derived from a radio coverage map.
- Determine a second radio signal deviation D2 between the second measured radio signal information and the second expected radio signal information.
- Determine a handover request response based on the first radio signal deviation D1, the second radio signal deviation D2 and the reserved network resources.
- Generate a second control message 504 comprising the handover request response and the second radio signal deviation D2.

A positive handover request response from the second network access node 300 to the first network access node 100 signals that the second network access node 300 can reserve network resources for the client device 600 independent of the determined second radio signal deviation D2 and in a proactive handover manner. In the case of high second radio signal deviation D2 it allows for example the first network access node 100 to select additional candidates to handover the client device 600. In the case of low second radio signal deviation D2 it allows for example the first network access node 100 to pursue the handover to the second network access node 300 as soon as the blocking ceases.

A negative response from the second network access node 300 to the first network access node 100 signals that the second network access node 300 cannot reserve network resources for the client device 100 given the determined second radio signal deviation D2. This allows for example the first network access node 100 to select another candidate network access node to handover the client device 600 to.

If the first control message 502 on the other hand comprises mentioned node addition request the second network access node 300 in step V performs the following:
- Obtain a second measured radio signal information for the client device 600.
- Obtain a second spatial location for the client device 600 based on the first spatial location SL1 for the client device 600.
- Derive a second expected radio signal information for the client device 600 based on the second spatial location for the client device 600. The second expected radio signal information can e.g. be derived from a radio coverage map.
- Determine a second radio signal deviation D2 between the second measured radio signal information and the second expected radio signal information.
- Determine a node addition request response based on the first radio signal deviation D1, the second radio signal deviation D2 and the reserved network resources.
- Generate a second control message 504 comprising the node addition request response and the second radio signal deviation D2.

A positive response from the second network access node 300 to the first network access node 100 signals that the second network access node 300 can reserve resources for the client device 600 independent of the determined second radio signal deviation D2 and in a proactive manner. In the case of high second radio signal deviation D2 it allows for example the first network access node 100 to select additional candidate network access nodes to add to the group of network access nodes serving the client device 600. In the case of low second radio signal deviation D2 it allows for example the first network access node 100 to pursue the node addition of the second network access node 300 as soon as the blocking ceases.

A negative response from the second network access node 300 to the first network access node 100 signals that the second network access node 300 cannot reserve network resources for the client device 600 given the determined second radio signal deviation D2. This allows for example the first network access node 100 to select another candidate network access node to add to the group of network access nodes serving the client device 600.

The generated second control message 504 therefore comprises at least one of handover request response together with a second radio signal deviation D2 and a node addition request response together with the second radio signal deviation D2.

Additionally, the second control message 504 may further comprises a second validity time period associated with the second radio signal deviation D2. The second validity time period corresponds to the time period that the network resources of the second network access node are reserved for the client device 600. The second network access node 300 may reserve network resources even when the second radio signal deviation D2 indicates blocking of the client device 600 in anticipation for the cease of the blocking within the time period given by the second validity time period. The second validity time period in the second control message 504 can be based on the first validity time period in the first control message 502 and the maximum time that network resources may be reserved by the second network access node 300.

In step VI in Fig. 6, the second network access node 300 transmits the second control message 504 to the first network access node 100.

In step VII in Fig. 6, if the second control message 504 comprises the mentioned handover request response the first network access node 100 performs the following:
- Determine an additional handover request based on the first radio signal deviation D1 and the second control message 504, wherein the additional handover request indicates a handover from the first network access node 100 to a third network access node 700.
- Generate an additional first control message 502' comprising the additional handover request.

However, if the second control message 504 on the other hand comprises mentioned node addition request response the first network access node 100 in step VII performs the following:
- Determine an additional node addition request based on the first radio signal deviation D1 and the second control message 504, wherein the additional node addition request indicates an addition of a third network access node 700 to a group of network access nodes configured to serve the client device 600.
- Generate an additional first control message 502' comprising the additional node addition request.

In step VIII in Fig. 6, the first network access node 100 finally transmits the additional first control message 502' to the third network access node 700 which is also illustrated in Fig. 4. The third network access node 700, upon reception of the first control message 502, acts in the same way as the second network access node 300 in step IV in Fig. 6.

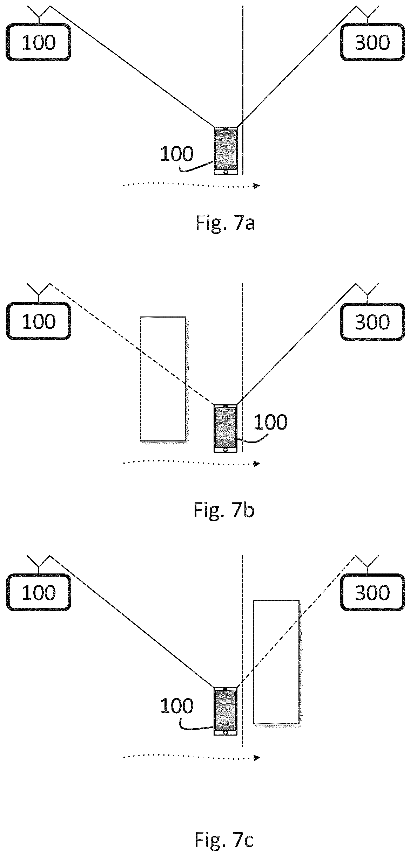

In the following description further detailed embodiments related to handover in different blocking scenarios, illustrated in Fig. 7a-7c, and with uplink and downlink measurements will be described. In this respect the first network access node 100 can be seen as the source network access node realising the source cell whilst the second network access node 300 can be seen as the target network access node realising the target cell.

Generally, in situations where the connection quality is relying on beam formed transmission and/or reception the vulnerability towards temporary blocking is increased, especially in cases where the TRPs have been placed at heights a few meters above the street level. Fig. 7a shows an example scenario addressed herein. Assume that the client device 600 moves from left to right in the figure and the vertical line is the handover border between the source network access node, i.e. the first network access node 100, and the target network access node, i.e. the second network access node 300. Assume further that the network has been able to collect measured radio signal information associated with the spatial location of the client device 600, either through MDT procedures or any other method, for a longer period of time such that the network can determine the spatial location where client devices are handed over between the source and target network access nodes. Through these spatial location-based measurements both source and target network access nodes have been able to determine its respective expected radio signal information value for the spatial locations in the area, e.g. through averaging or other filtering method. The mobility handling in conventional solutions either base the handover border on the current measurement report or on spatial location. In the case of beam aligned connections, the link can easily be obstructed or even completely blocked for shorter periods of time. These blocking occasions can be sometimes very short and sometimes last for minutes, depending on such things as speed of the client device 600, speed of the blocking item, etc. Fig. 7b shows an example of the case where a temporary obstacle is obstructing the beam-aligned connection to the source cell. Imagine a bus driving along a street and the client device 600 is moving on the sidewalk being connected to the TRP across the street. As the client device 600 is approaching the known handover border between the cells, based on earlier experience of the network, the sharing of the temporary blocking between the cells can allow the network to make alternative solutions depending on the current, although temporary, situation. Fig. 7c on the other hand shows an example of the case where a temporary obstacle is obstructing the link to the target cell.

In traditional wireless network the decision to move the connection to another target network access node 300 has been made by the source network access node 100 based on measurements to obtain measured radio signal information which are performed and reported by the client device 600, sometimes referred to as Mobile Assisted Handover. The network will configure the client device 600 to make measurements for obtaining measured radio signal information of neighbour cells and send measurement reports to the network either periodically or when a specific criterion has been fulfilled. If the radio link quality between the source network access node and the client device suddenly drops, or even is completely blocked, due to an obstacle, the measurement report will not be delivered to the source network access node and therefore the handover will not be triggered. The client device 600 would start timers and counters and if the situation would not change within a short time it would declare itself being out of coverage and search for a new cell to connect to. If the blocking of the path is removed within a short time the client device 600 would restart making the measurements for obtaining first measured radio signal information and checking for the events before sending the report, but the delay that the temporary blocking would have caused would also delay the measurement report and therefore the handover decision.

When the link towards the source network access node 100 is temporary blocked as illustrated in Fig. 7b the client device 600 will suddenly measure and find the target cell to be much stronger than the source cell. This will trigger a measurement report that the client device 600 would like to send, but since the link to the source network access node 100 is blocked it will not be given a grant for the transmission of the report. In case the link is not completely blocked, but severely degraded in quality, the measurement report could be delivered with higher resource consumption or higher latency due to the lower modulation and coding scheme (MCS) indicated in the scheduling information from the source network access node.

As described above, the network could have knowledge about the spatial location of the client device 600 and with help of repeated spatial location estimations it can also determine and predict the spatial location of the client device 600 in the nearest time frame. The positioning can for example be based on the client device estimations, such as Global Navigation Satellite System (GNSS), or on network estimations, such as angle of arrival (AoA) and Time of Arrival (ToA), etc.

In one embodiment of the invention the source network access node 100 determines the spatial location of the client device 600 and based on historical information retrieved from a database about the radio signal in the determined spatial location, the source network access node 100 can compare the spatial location with spatial locations where normally a handover is performed or determine which network access node that should be selected as the target network access node 300 based on historical measurements of the radio link quality in the determined spatial location of the client device 600. With historical information about the signal strength and radio link quality of the neighbour network access nodes in the determined spatial location, the source network access node 100 can select the target network access node 300, for example based on the strongest expected value of signal strength, or the best radio link quality, in the historical information, and initiate a handover preparation procedure to the selected target network access node. Once the temporary blocking of the link to the client device 600 is over, the handover can be performed immediately to the prepared target network access node.

By including information about the spatial location of the client device 600, information about the missing measurement report and the deviation from the historical average value of the client device 600 at the expected spatial location in the handover signalling, the target network access node 300 can then prepare the handover in advance knowing the situation about the client device 600. The target network access node 300 can then increase the time that the network resources are reserved for the client device 600, start receiving and buffer the user data of the client device 600, etc. The first radio signal deviation D1 can also be used to prevent any frequent handover between the network access nodes based on stricter handover decision by using larger threshold values on handover control related parameters prohibiting going back to the old network access node, since the old link was fluctuating due to temporary blocking. Another usage of the first radio signal deviation D1 by the target network access node 300 is to be able to proactively prepare for the client device to access its target cell after a radio link failure (RLF) and ensure the correct sub-nodes, such as, TRP or Distributed Units (DU), are ready. This could be done since it is impossible to predict the length in time for the temporary blocking of the link. This would enable to speed up the recovery process. In case of not complete blocking this would not be necessary, which also could be identified by the target network access node 300 based on the first radio signal deviation D1.

When the temporary blocking is gone, the client device 600 will be able to communicate the measurement report to the source network access node 100. The source network access node 100 can immediately send the handover command to the client device 600, which will reduce the time for the process and therefore increase the probability for a successful mobility procedure.

In case of temporary neighbour target cell blocking as illustrated in Fig. 7c, other problems will occur, since the neighbour target cell will not be reported as stronger than the source cell until the temporary blocking disappears. With traditional time-to-trigger (TTT) the handover will be triggered later than usual and therefore increase the potential for errors in the messages to handle the handover.

The source network access node 100 can by determining the spatial location of the client device 600 and compare the spatial location with historical information about where the measurement report has been triggered before. This information can be the base for the decision to initiate a handover procedure to the target network access node 300. By including information about the spatial location of the client device 600, information about the missing measurement report and the first radio signal deviation D1 from the historical average value characterising the expected radio signal information of the client device 600 at the expected spatial location in the handover signalling, the target network access node 300 can then prepare the handover in advance knowing the situation about the client device 600. The target network access node 300 can then increase the time that the network resources are reserved for the client device 600, start receiving and buffer the user data of the client device 600, etc.

When the temporary blocking is gone, the client device 600 will suddenly see the neighbour target cell as much stronger than the serving source cell and after TTT period a measurement report is sent to the source network access node 100. Instead of initiating the handover procedure at this point, the source network access node 100 can immediately send the handover command to the client device 600, which will reduce the time for the process and therefore increase the probability for a successful mobility procedure.

In another solution the mobility will be based on measurements performed, to obtain measured radio signal information, by the network access node on reference signals transmitted by the client device 600. In practice it is only the measurement report that comes from the target network access node 300, instead of the client device 600, that is the difference between the two cases of DL and UL based mobility. In this case the awareness of the temporary blocking will be available in each respective network access node, and this needs to be shared between the network access nodes.

In case the link to the source network access node 100 is blocked as illustrated in Fig. 7b, the source network access node 100 will detect the sudden drop in received signal strength. The target network access node 300 also makes measurement to obtain the second measured radio signal information of the client device 600 and can report the measured value to the source network access node 100. Since the signal to the source network access node 100 has dropped a spatial location estimation based on the first measured radio signal information might not be feasible, but thanks to previous measurements the current spatial location of the client device 600 can be estimated. The measurement report from the target network access node 300 could also potentially include the spatial location estimation of the client device 600, which then could be used in the source network access node 100. The source network access node 100 can determine the first radio signal deviation D1 from the learnt average value of the first expected radio signal information in the estimated spatial location. Since the radio link between the client device 600 and the source network access node 100 is (temporary) blocked the source network access node 100 may decide to initiate a handover procedure.

In the handover request message, the source network access node 100 includes the estimated spatial location and the determined first radio signal deviation D1, such that the target network access node 300 could be aware of the situation. The target network access node 300 can also determine the second radio signal deviation D2 from the second expected radio signal information of the estimated spatial location in its realm.

This second radio signal deviation D2 can also be included in the positive handover request response message to inform the source network access node about the link between the client device 600 and the target network access node 300.

Based on the information in the positive handover request response message, and in the case of temporary blocking of the link, the source network access node 100 can then store this value and as soon as the temporary blocking of the link is over it can send the handover command to the client device 600 for immediate handover. In case the link is not blocked and everything works as expected, the source network access node 100 can then send the handover command to the client device 600 for immediate handover.

Note, that in certain cases of UL based mobility, there is no need for the handover command to be sent to the client device 600 and the target network access node 300 can immediately take over the responsibility for the client device 600.

The target network access node 300 can use the information about the first radio signal deviation D1 from the first expected radio signal information in the source network access node 100 to make the reservation of network resources for the handover valid for a longer time than usual, such that the client device 600 can access the second network access node 300 as soon as possible after the blocking period. The first radio signal deviation D1 information can also be used to prevent any frequent handover between the network access nodes based on stricter handover decision by using larger threshold values on handover control related parameters prohibiting going back to the first network access node 100, since the old link was fluctuating due to temporary blocking. Another usage of the first radio signal deviation D1 by the target network access node 300 is to be able to proactively prepare for the client device 600 to access its target cell after RLF and ensure the correct sub-nodes, such as TRP or DU, are ready. This could be done since it is impossible to predict the length in time for the temporary blocking of the radio link. This would enable to speed up the recovery process. In case of not complete blocking this would not be necessary, which also could be identified by the target network access node 300 based on the first radio signal deviation D1.

In case the link to the target network access node 300 becomes blocked, as illustrated in Fig. 7c, the source network access node 100 would either be able to determine this from the measurement reports from the target network access node 300. In case the measurement report is not sent, since the target network access node 300 can consider nothing to report, the source network access node 100 can still estimate the spatial location and compare the first and second expected radio signal information of the source network access node 100 and the target network access node 300 at the estimated spatial location of the client device 600 and determine that the handover to the target cell will be expected soon.

The source network access node 100 includes the estimated spatial location of the client device 600 and the first radio signal deviation D1 from the first expected radio signal information. The target network access node 300 can then use the information to determine the second radio signal deviation D2 from the second expected radio signal information that the target network access node 300 experiences. In case the target network access node 300 has not sent a measurement report to the source network access node 100 before, it can include the second radio signal deviation D2 information in a positive handover request response message to inform the source network access node 100 about the temporary blocking of the radio link. The target network access node 300 can then reserve network resources for the client device 600 to access the target network access node 300 and be prepared for the handover. Once the target network access node 300 receives a measurement report and obtains the measured radio signal information of the client devices in the uplink with good enough radio link quality or strength, it can report it to the source network access node 100. The source network access node 100 can also immediately send a handover command to the client device 600 to change the serving network access node 100.

In all the above given embodiments the shown messages do include other information about the contexts and client device identities, etc. which is related to the client device 600 and the ongoing services. This is however no difference from prior art handover solutions and are therefore omitted from the descriptions.

A client device 600 herein, may be denoted as a user device, a User Equipment (UE), a mobile station, an internet of things (loT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in the present context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

The network access node 100; 300 herein may also be denoted as a radio network access node, an access network access node, an access point, or a base station, e.g. a Radio Base Station (RBS), which in some networks may be referred to as transmitter, "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the client device 600 and the network access node 100; 300 comprises the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processor(s) of the client device 600 and the network access node 100; 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A first network access node (100) for a wireless communication system (500), the first network access node (100) comprises:
at least one processing unit, configured to:
obtain a first measured radio signal information for a client device (600);
obtain a first spatial location for the client device (600);
derive, when the radio link quality between the first network node and client device suddenly drops or is completely blocked, a first expected radio signal information for the client device (600) using a database and the first spatial location for the client device (600), wherein the database stores radio signal measurements related to a spatial location over time, as distributions of the radio signal;
determine a first radio signal deviation, D1, by comparing the first measured radio signal information with the first expected radio signal information at the first spatial location of the client device;
generate a first control message (502) comprising the first spatial location for the client device (600) and the first radio signal deviation, D1;
at least one transceiving unit, configured to:
transmit the first control message (502) to a second network access node (300).

2. The first network access node (100) according to claim 1, the processing unit is further configured to
generate the first control message (502) if the first radio signal deviation, D1, is larger than a deviation threshold value.

3. The first network access node (100) according to any of claim 1 to 2, the processing unit is further configured to
select, prior to transmitting the first control message (502), the second network access node (300) based on at least one of the first spatial location and the first expected radio signal information.

4. The first network access node (100) according to any of claim 1 to 3, the processing unit is further configured to
determine a first validity time period associated with the first radio signal deviation, D1;
generate the first control message (502) further comprising the first validity time period.

5. The first network access node (100) according to any of claim 1 to 4, the processing unit is further configured to
determine, when serving the client device (600), a handover request based on the first radio signal deviation, D1, wherein the handover request indicates a handover from the first network access node (100) to the second network access node (300);
generate the first control message (502) further comprising the handover request.

6. The first network access node (100) according to claim 5,
the transceiving unit is further configured to receive a second control message (504) from the second network access node (300), wherein the second control message (504) comprises a handover request response and a second radio signal deviation, D2, wherein the second radio signal deviation, D2, defines a deviation between a second measured radio signal information for the client device (600) and a second expected radio signal information for the client device (600);
the processing unit is further configured to determine an additional handover request based on the first radio signal deviation, D1, and the second control message (504), wherein the additional handover request indicates a handover from the first network access node (100) to a third network access node (700);
generate an additional first control message (502') comprising the additional handover request;
transmit the additional first control message (502') to the third network access node (700).

7. The first network access node (100) according to any of claim 1 to 6, the processing unit is further configured to
determine, when serving the client device (600), a node addition request based on the first radio signal deviation, D1, wherein the node addition request indicates an addition of the second network access node (300) to a group of network access nodes configured to serve the client device (600);
generate the first control message (502) further comprising the node addition request.

8. The first network access node (100) according to claim 7,
the transceiving unit is further configured to receive a second control message (504) from the second network access node (300), wherein the second control message (504) comprises a node addition request response and a second radio signal deviation, D2, wherein the second radio signal deviation, D2, defines a deviation between a second measured radio signal information for the client device (600) and a second expected radio signal information for the client device (600);
the processing unit is further configured to determine an additional node addition request based on the first radio signal deviation, D1, and the second control message (504), wherein the additional node addition request indicates an addition of a third network access node (700) to a group of network access nodes configured to serve the client device (600);
generate an additional first control message (502') comprising the additional node addition request; and
the transceiving unit is further configured to transmit the additional first control message (502') to the third network access node (700).

9. The first network access node (100) according to claim 6 or 8, wherein the second control message (504) further comprises a second validity time period associated with the second radio signal deviation, D2.

10. The first network access node (100) according to any of claim 1 to 9,
the transceiving unit is further configured to transmit, prior to obtain the first measured radio signal information, a measurement report request to the client device (600);
receive a measurement report from the client device (600) in response to the transmission of the measurement report request;
the transceiving unit is further configured to obtain the first measured radio signal information based on the measurement report.

11. A wireless communication system (500) comprising the first network access node (100) according to any one of claims 1 - 10 and further comprising a second network access node (300), the second network access node (300) comprises:
a transceiving unit, configured to receive a first control message (502) from the first network access node (100), wherein the first control message (502) comprises a first spatial location for a client device (600) and a first radio signal deviation, D1, wherein the first radio signal deviation, D1, defines a deviation between a first measured radio signal information for the client device (600) and a first expected radio signal information for the client device (600);
a processing unit, configured to reserve network resources based on the first control message (502).

12. The wireless communication system (500) according to claim 11, wherein the first control message (502) further comprises a handover request indicating a handover from the first network access node (100) to the second network access node (300); and the processing unit is further configured to
obtain a second measured radio signal information for the client device (600);
obtain a second spatial location for the client device (600) based on the first spatial location for the client device (600);
derive a second expected radio signal information for the client device (600) based on the second spatial location for the client device (600);
determine a second radio signal deviation, D2, between the second measured radio signal information and the second expected radio signal information;
determine a handover request response based on the first radio signal deviation, D1, the second radio signal deviation, D2, and the reserved network resources;
generate a second control message (504) comprising the handover request response and the second radio signal deviation, D2;and
the transceiving unit is further configured to transmit the second control message (504) to the first network access node (100).

13. The wireless communication system (500) according to claim 11 or 12, wherein the first control message (502) further comprises a node addition request indicating addition of the second network access node (300) to a group of network access nodes configured to serve the client device (600); and the processing unit is further configured to
obtain a second measured radio signal information for the client device (600);
obtain a second spatial location for the client device (600) based on the first spatial location for the client device (600);
derive a second expected radio signal information for the client device (600) based on the second spatial location for the client device (600);
determine a second radio signal deviation, D2, betweenthe second measured radio signal information and the second expected radio signal information;
determine a node addition request response based on the first radio signal deviation, D1, the second radio signal deviation, D2, and the reserved network resources;
generate a second control message (504) comprising the node addition request response and the second radio signal deviation, D2,; and
the trasceiving unit is further configured to transmit the second control message (504) to the first network access node (100).

14. The wireless communication system (500) according to claim 12 or 13, the processing unit is further configured to
determine a second validity time period associated with the second radio signal deviation, D2;
generate the second control message (504) further comprising the second validity time period.

## Patentansprüche

1. Erster Netzwerkzugangsknoten (100) für ein Funkkommunikationssystem (500), wobei der erste Netzwerkzugangsknoten (100) Folgendes umfasst:
mindestens eine Verarbeitungseinheit, die für Folgendes ausgebildet ist:
Erhalten einer ersten gemessenen Funksignalinformation für ein Client-Gerät (600);
Erhalten einer ersten räumlichen Position für das Client-Gerät (600);
Ableiten, wenn die Funkverbindungsqualität zwischen dem ersten Netzwerkknoten und dem Client-Gerät plötzlich abfällt oder vollständig blockiert ist, einer ersten erwarteten Funksignalinformation für das Client-Gerät (600) unter Verwendung einer Datenbank und der ersten räumlichen Position für das Client-Gerät (600),
wobei die Datenbank Funksignalmessungen, die sich auf eine räumliche Position über die Zeit beziehen, als Verteilungen des Funksignals speichert;
Bestimmen einer ersten Funksignalabweichung D1 durch Vergleichen der ersten gemessenen Funksignalinformationen mit den ersten erwarteten Funksignalinformationen an der ersten räumlichen Position des Client-Gerätes;
Erzeugen einer ersten Steuernachricht (502), die die erste räumliche Position für das Client-Gerät (600) und die erste Funksignalabweichung D1 enthält;
mindestens eine Sende-/Empfangseinheit, die für Folgendes ausgebildet ist:
Übertragen der ersten Steuernachricht (502) an einen zweiten Netzwerkzugangsknoten (300).

2. Erster Netzwerkzugangsknoten (100) gemäß Anspruch 1, wobei die Verarbeitungseinheit ferner für Folgendes ausgebildet ist:
Erzeugen der ersten Steuernachricht (502), falls die erste Funksignalabweichung D1 größer als ein Abweichungsschwellenwert ist.

3. Erster Netzwerkzugangsknoten (100) gemäß einem der Ansprüche 1 bis 2, wobei die Verarbeitungseinheit ferner für Folgendes ausgebildet ist:
Auswählen, vor dem Übertragen der ersten Steuernachricht (502), des zweiten Netzwerkzugangsknotens (300) auf der Grundlage von mindestens der ersten räumlichen Position und der ersten erwarteten Funksignalinformation.

4. Erster Netzwerkzugangsknoten (100) gemäß einem der Ansprüche 1 bis 3, wobei die Verarbeitungseinheit ferner für Folgendes ausgebildet ist:
Bestimmen eines ersten Gültigkeitszeitraums, der mit der ersten Funksignalabweichung D1 verbunden ist;
Erzeugen der ersten Steuernachricht (502), die ferner den ersten Gültigkeitszeitraum umfasst.

5. Erster Netzwerkzugangsknoten (100) gemäß einem der Ansprüche 1 bis 4, wobei die Verarbeitungseinheit ferner für Folgendes ausgebildet ist:
Bestimmen, beim Bedienen des Client-Gerätes (600), einer Handover-Anforderung auf der Grundlage der ersten Funksignalabweichung D1,
wobei die Handover-Anforderung ein Handover vom ersten Netzwerkzugangsknoten (100) zum zweiten Netzwerkzugangsknoten (300) anzeigt;
Erzeugen der ersten Steuernachricht (502), die ferner die Handover-Anforderung enthält.

6. Erster Netzwerkzugangsknoten (100) gemäß Anspruch 5,
wobei die Sende-/Empfangseinheit ferner so ausgebildet ist, dass sie eine zweite Steuernachricht (504) vom zweiten Netzwerkzugangsknoten (300) empfängt,
wobei die zweite Steuernachricht (504) eine Antwort auf eine Handover-Anforderung und eine zweite Funksignalabweichung D2 enthält,
wobei die zweite Funksignalabweichung D2 eine Abweichung zwischen einer zweiten gemessenen Funksignalinformation für das Client-Gerät (600) und einer zweiten erwarteten Funksignalinformation für das Client-Gerät (600) definiert;
die Verarbeitungseinheit ferner so ausgebildet ist, dass sie auf der Grundlage der ersten Funksignalabweichung D1 und der zweiten Steuernachricht (504) eine zusätzliche Handover-Anforderung bestimmt,
wobei die zusätzliche Handover-Anforderung ein Handover vom ersten Netzwerkzugangsknoten (100) zu einem dritten Netzwerkzugangsknoten (700) anzeigt;
Erzeugen einer zusätzlichen ersten Steuernachricht (502'), die die zusätzliche Handover-Anforderung enthält;
Übertragen der zusätzlichen ersten Steuernachricht (502') an den dritten Netzwerkzugangsknoten (700).

7. Erster Netzwerkzugangsknoten (100) gemäß einem der Ansprüche 1 bis 6, wobei die Verarbeitungseinheit ferner für Folgendes ausgebildet ist:
Bestimmen, beim Bedienen des Client-Gerätes (600), einer Knotenhinzufügungsanforderung auf der Grundlage der ersten Funksignalabweichung D1,
wobei die Knotenhinzufügungsanforderung eine Hinzufügung des zweiten Netzwerkzugangsknotens (300) zu einer Gruppe von Netzwerkzugangsknoten anzeigt, die zum Bedienen des Client-Gerätes (600) ausgebildet sind;
Erzeugen der ersten Steuernachricht (502), die ferner die Knotenhinzufügungsanforderung enthält.

8. Erster Netzwerkzugangsknoten (100) gemäß Anspruch 7,
wobei die Sende-/Empfangseinheit ferner so ausgebildet ist, dass sie eine zweite Steuernachricht (504) vom zweiten Netzwerkzugangsknoten (300) empfängt,
wobei die zweite Steuernachricht (504) eine Antwort auf eine Knotenhinzufügungsanforderung und eine zweite Funksignalabweichung D2 enthält, wobei die zweite Funksignalabweichung D2 eine Abweichung zwischen einer zweiten gemessenen Funksignalinformation für das Client-Gerät (600) und einer zweiten erwarteten Funksignalinformation für das Client-Gerät (600) definiert;
die Verarbeitungseinheit ferner so ausgebildet ist, dass sie auf der Grundlage der ersten Funksignalabweichung D1 und der zweiten Steuernachricht (504) eine Anforderung der Hinzufügung eines zusätzlichen Knotens bestimmt,
wobei die Anforderung der Hinzufügung eines zusätzlichen Knotens eine Hinzufügung eines dritten Netzwerkzugangsknotens (700) zu einer Gruppe von Netzwerkzugangsknoten anzeigt, die zum Bedienen des Client-Gerätes (600) ausgebildet sind;
Erzeugen einer zusätzlichen ersten Steuernachricht (502'), die die Anforderung der Hinzufügung eines zusätzlichen Knotens enthält; und
die Sende-/Empfangseinheit ferner so ausgebildet ist, dass sie die zusätzliche erste Steuernachricht (502') an den dritten Netzwerkzugangsknoten (700) überträgt.

9. Erster Netzwerkzugangsknoten (100) gemäß Anspruch 6 oder 8,
wobei die zweite Steuernachricht (504) ferner einen zweiten Gültigkeitszeitraum umfasst, der mit der zweiten Funksignalabweichung D2 verbunden ist.

10. Erster Netzwerkzugangsknoten (100) gemäß einem der Ansprüche 1 bis 9,
wobei die Sende-/Empfangseinheit ferner für Folgendes ausgebildet ist:
Übertragen, vor dem Erhalten der ersten gemessenen Funksignalinformationen, einer Messberichtsanforderung an das Client-Gerät (600);
Empfangen eines Messberichts vom Client-Gerät (600) als Reaktion auf die Übertragung der Messberichtsanforderung;
wobei die Sende-/Empfangseinheit ferner für Folgendes ausgelegt ist:
Erhalten der ersten gemessenen Funksignalinformationen auf der Grundlage des Messberichts.

11. Funkkommunikationssystem (500), das den ersten Netzwerkzugangsknoten (100) gemäß einem der Ansprüche 1 - 10 und ferner einen zweiten Netzwerkzugangsknoten (300) umfasst, wobei der zweite Netzwerkzugangsknoten (300) Folgendes umfasst:
eine Sende-/Empfangseinheit, die so ausgebildet ist, dass sie eine erste Steuernachricht (502) vom ersten Netzwerkzugangsknoten (100) empfängt,
wobei die erste Steuernachricht (502) eine erste räumliche Position für ein Client-Gerät (600) und eine erste Funksignalabweichung D1 umfasst,
wobei die erste Funksignalabweichung D1 eine Abweichung zwischen einer ersten gemessenen Funksignalinformation für das Client-Gerät (600) und einer ersten erwarteten Funksignalinformation für das Client-Gerät (600) definiert;
eine Verarbeitungseinheit, die so ausgebildet ist, dass sie Netzwerkressourcen auf der Grundlage der ersten Steuernachricht (502) reserviert.

12. Funkkommunikationssystem (500) gemäß Anspruch 11,
wobei die erste Steuernachricht (502) ferner eine Handover-Anforderung umfasst, die ein Handover vom ersten Netzwerkzugangsknoten (100) zum zweiten Netzwerkzugangsknoten (300) anzeigt; und
die Verarbeitungseinheit ferner für Folgendes ausgebildet ist:
Erhalten einer zweiten gemessenen Funksignalinformation für das Client-Gerät (600);
Erhalten einer zweiten räumlichen Position für das Client-Gerät (600) auf der Grundlage der ersten räumlichen Position für das Client-Gerät (600);
Ableiten einer zweiten erwarteten Funksignalinformation für das Client-Gerät (600) auf der Grundlage der zweiten räumlichen Position für das Client-Gerät (600);
Bestimmen einer zweiten Funksignalabweichung D2 zwischen der zweiten gemessenen Funksignalinformation und der zweiten erwarteten Funksignalinformation;
Bestimmen einer Antwort auf eine Handover-Anforderung auf der Grundlage der ersten Funksignalabweichung D1, der zweiten Funksignalabweichung D2 und der reservierten Netzwerkressourcen;
Erzeugen einer zweiten Steuernachricht (504), die die Antwort auf die Handover-Anforderung und die zweite Funksignalabweichung D2 enthält; und
wobei die Sende-/Empfangseinheit ferner so ausgebildet ist, dass sie die zweite Steuernachricht (504) an den ersten Netzwerkzugangsknoten (100) überträgt.

13. Funkkommunikationssystem (500) gemäß Anspruch 11 oder 12,
wobei die erste Steuernachricht (502) ferner eine Knotenhinzufügungsanforderung umfasst, die die Hinzufügung des zweiten Netzwerkzugangsknotens (300) zu einer Gruppe von Netzwerkzugangsknoten anzeigt, die zum Bedienen des Client-Gerätes (600) ausgebildet sind;
und die Verarbeitungseinheit ferner für Folgendes ausgebildet ist:
Erhalten einer zweiten gemessenen Funksignalinformation für das Client-Gerät (600);
Erhalten einer zweiten räumlichen Position für das Client-Gerät (600) auf der Grundlage der ersten räumlichen Position für das Client-Gerät (600);
Ableiten einer zweiten erwarteten Funksignalinformation für das Client-Gerät (600) auf der Grundlage der zweiten räumlichen Position für das Client-Gerät (600);
Bestimmen einer zweiten Funksignalabweichung D2 zwischen der zweiten gemessenen Funksignalinformation und der zweiten erwarteten Funksignalinformation;
Bestimmen einer Antwort auf eine Knotenhinzufügungsanforderung auf der Grundlage der ersten Funksignalabweichung D1, der zweiten Funksignalabweichung D2 und der reservierten Netzwerkressourcen;
Erzeugen einer zweiten Steuernachricht (504), die die Antwort auf die Knotenhinzufügungsanforderung und die zweite Funksignalabweichung D2 enthält; und
wobei die Sende-/Empfangseinheit ferner so ausgebildet ist, dass sie die zweite Steuernachricht (504) an den ersten Netzwerkzugangsknoten (100) überträgt.

14. Funkkommunikationssystem (500) gemäß Anspruch 12 oder 13, wobei die Verarbeitungseinheit ferner für Folgendes ausgebildet ist:
Bestimmen eines zweiten Gültigkeitszeitraums, der mit der zweiten Funksignalabweichung D2 verbunden ist;
Erzeugen der zweiten Steuernachricht (504), die ferner den zweiten Gültigkeitszeitraum umfasst.

## Revendications

1. Premier nœud d'accès de réseau (100) pour un système de communication sans fil (500), le premier nœud d'accès de réseau (100) comprenant :
au moins une unité de traitement, configurée pour :
obtenir une première information de signal radio mesuré pour un dispositif de client (600) ;
obtenir un premier emplacement spatial pour le dispositif de client (600) ;
dériver, lorsque la qualité de liaison radio entre le premier nœud de réseau et le dispositif de client diminue soudainement ou est complètement bloquée, une première information de signal radio attendu pour le dispositif de client (600) en utilisant une base de données et le premier emplacement spatial pour le dispositif de client (600),
dans lequel la base de données stocke des mesures de signal radio connexes à un emplacement spatial au fil du temps, en tant que distributions du signal radio ;
déterminer un premier écart de signal radio, D1, en comparant la première information de signal radio mesuré à la première information de signal radio attendu au niveau du premier emplacement spatial du dispositif de client ;
générer un premier message de commande (502) comprenant le premier emplacement spatial pour le dispositif de client (600) et le premier écart de signal radio, D1 ;
au moins une unité de transmission-réception, configurée pour :
transmettre le premier message de commande (502) à un deuxième nœud d'accès de réseau (300).

2. Premier nœud d'accès de réseau (100) selon la revendication 1, l'unité de traitement étant en outre configurée pour
générer le premier message de commande (502) si le premier écart de signal radio, D1, est supérieur à une valeur de seuil d'écart.

3. Premier nœud d'accès de réseau (100) selon l'une quelconque des revendications 1 à 2, l'unité de traitement étant en outre configurée pour
sélectionner, avant de transmettre le premier message de commande (502), le deuxième nœud d'accès de réseau (300) sur la base d'au moins un parmi le premier emplacement spatial et la première information de signal radio attendu.

4. Premier nœud d'accès de réseau (100) selon l'une quelconque des revendications 1 à 3, l'unité de traitement étant en outre configurée pour
déterminer une première période de validité associée au premier écart de signal radio, D1;
générer le premier message de commande (502) comprenant en outre la première période de validité.

5. Premier nœud d'accès de réseau (100) selon l'une quelconque des revendications 1 à 4, l'unité de traitement étant en outre configurée pour
déterminer, lors de la desserte du dispositif de client (600), une demande de transfert sur la base du premier écart de signal radio, D1, dans lequel la demande de transfert indique un transfert du premier nœud d'accès de réseau (100) au deuxième nœud d'accès de réseau (300) ;
générer le premier message de commande (502) comprenant en outre la demande de transfert.

6. Premier nœud d'accès de réseau (100) selon la revendication 5,
l'unité de transmission-réception étant en outre configurée pour recevoir un second message de commande (504) en provenance du deuxième nœud d'accès de réseau (300), dans lequel le second message de commande (504) comprend une réponse de demande de transfert et un second écart de signal radio, D2, dans lequel le second écart de signal radio, D2, définit un écart entre une seconde information de signal radio mesuré pour le dispositif de client (600) et une seconde information de signal radio attendu pour le dispositif de client (600) ;
l'unité de traitement étant en outre configurée pour déterminer une demande de transfert supplémentaire sur la base du premier écart de signal radio, D1, et du second message de commande (504), dans lequel la demande de transfert supplémentaire indique un transfert du premier nœud d'accès de réseau (100) à un troisième nœud d'accès de réseau (700) ;
générer un premier message de commande supplémentaire (502') comprenant la demande de transfert supplémentaire ;
transmettre le premier message de commande supplémentaire (502') au troisième nœud d'accès de réseau (700).

7. Premier nœud d'accès de réseau (100) selon l'une quelconque des revendications 1 à 6, l'unité de traitement étant en outre configurée pour
déterminer, lors de la desserte du dispositif de client (600), une demande d'ajout de nœud sur la base du premier écart de signal radio, D1, dans lequel la demande d'ajout de nœud indique un ajout du deuxième nœud d'accès de réseau (300) à un groupe de nœuds d'accès de réseau configurés pour desservir le dispositif de client (600) ;
générer le premier message de commande (502) comprenant en outre la demande d'ajout de nœud.

8. Premier nœud d'accès de réseau (100) selon la revendication 7,
l'unité de transmission-réception étant en outre configurée pour recevoir un second message de commande (504) en provenance du deuxième nœud d'accès de réseau (300), dans lequel le second message de commande (504) comprend une réponse de demande d'ajout de nœud et un second écart de signal radio, D2, dans lequel le second écart de signal radio, D2, définit un écart entre une seconde information de signal radio mesuré pour le dispositif de client (600) et une seconde information de signal radio attendu pour le dispositif de client (600) ;
l'unité de traitement étant en outre configurée pour déterminer une demande d'ajout de nœud supplémentaire sur la base du premier écart de signal radio, D1, et du second message de commande (504), dans lequel la demande d'ajout de nœud supplémentaire indique un ajout d'un troisième nœud d'accès de réseau (700) à un groupe de nœuds d'accès de réseau configurés pour desservir le dispositif de client (600) ;
générer un premier message de commande supplémentaire (502') comprenant la demande d'ajout de nœud supplémentaire ; et
l'unité de transmission-réception étant en outre configurée pour transmettre le premier message de commande supplémentaire (502') au troisième nœud d'accès de réseau (700).

9. Premier nœud d'accès de réseau (100) selon la revendication 6 ou 8, dans lequel le second message de commande (504) comprend en outre une seconde période de validité associée au second écart de signal radio, D2.

10. Premier nœud d'accès de réseau (100) selon l'une quelconque des revendications 1 à 9,
l'unité de transmission-réception étant en outre configurée pour transmettre, avant d'obtenir la première information de signal radio mesuré, une demande de rapport de mesure au dispositif de client (600) ;
recevoir un rapport de mesure en provenance du dispositif de client (600) en réponse à la transmission de la demande de rapport de mesure ;
l'unité de transmission-réception étant en outre configurée pour obtenir la première information de signal radio mesuré sur la base du rapport de mesure.

11. Système de communication sans fil (500) comprenant le premier nœud d'accès de réseau (100) selon l'une quelconque des revendications 1 à 10 et comprenant en outre un deuxième nœud d'accès de réseau (300), le deuxième nœud d'accès de réseau (300) comprenant :
une unité de transmission-réception, configurée pour recevoir un premier message de commande (502) en provenance du premier nœud d'accès de réseau (100), dans lequel le premier message de commande (502) comprend un premier emplacement spatial pour un dispositif de client (600) et un premier écart de signal radio, D1, dans lequel le premier écart de signal radio, D1, définit un écart entre une première information de signal radio mesuré pour le dispositif de client (600) et une première information de signal radio attendu pour le dispositif de client (600) ;
une unité de traitement, configurée pour réserver des ressources de réseau sur la base du premier message de commande (502).

12. Système de communication sans fil (500) selon la revendication 11, dans lequel le premier message de commande (502) comprend en outre une demande de transfert indiquant un transfert du premier nœud d'accès de réseau (100) au deuxième nœud d'accès de réseau (300) ; et l'unité de traitement est en outre configurée pour obtenir une seconde information de signal radio mesuré pour le dispositif de client (600) ;
obtenir un second emplacement spatial pour le dispositif de client (600) sur la base du premier emplacement spatial pour le dispositif de client (600) ;
dériver une seconde information de signal radio attendu pour le dispositif de client (600) sur la base du second emplacement spatial pour le dispositif de client (600) ;
déterminer un second écart de signal radio, D2, entre la seconde information de signal radio mesuré et la seconde information de signal radio attendu ;
déterminer une réponse de demande de transfert sur la base du premier écart de signal radio, D1, du second écart de signal radio, D2, et des ressources de réseau réservées ; générer un second message de commande (504) comprenant la réponse de demande de transfert et le second écart de signal radio, D2 ; et
l'unité de transmission-réception est en outre configurée pour transmettre le second message de commande (504) au premier nœud d'accès de réseau (100).

13. Système de communication sans fil (500) selon la revendication 11 ou 12, dans lequel le premier message de commande (502) comprend en outre une demande d'ajout de nœud indiquant l'ajout du deuxième nœud d'accès de réseau (300) à un groupe de nœuds d'accès de réseau configurés pour desservir le dispositif de client (600) ; et l'unité de traitement est en outre configurée pour
obtenir une seconde information de signal radio mesuré pour le dispositif de client (600) ;
obtenir un second emplacement spatial pour le dispositif de client (600) sur la base du premier emplacement spatial pour le dispositif de client (600) ;
dériver une seconde information de signal radio attendu pour le dispositif de client (600) sur la base du second emplacement spatial pour le dispositif de client (600) ;
déterminer un second écart de signal radio, D2, entre la seconde information de signal radio mesuré et la seconde information de signal radio attendu ;
déterminer une réponse de demande d'ajout de nœud sur la base du premier écart de signal radio, D1, du second écart de signal radio, D2, et des ressources de réseau réservées ;
générer un second message de commande (504) comprenant la réponse de demande d'ajout de nœud et le second écart de signal radio, D2, ; et
l'unité de transmission-réception est en outre configurée pour transmettre le second message de commande (504) au premier nœud d'accès de réseau (100).

14. Système de communication sans fil (500) selon la revendication 12 ou 13, l'unité de traitement étant en outre configurée pour
déterminer une seconde période de validité associée au second écart de signal radio, D2;
générer le second message de commande (504) comprenant en outre la seconde période de validité.
